# EUROPEAN PATENT SPECIFICATION

(11) **EP 0 354 816 B1**
(45) Date of publication and mention of the grant of the patent: **11.01.1995**
(21) Application number: 89308207.3
(22) Date of filing: 11.08.1989
(51) Int. Cl.: G06K 1/12

(54) **Improvements relating to bar code printing**
Strichkodedruck
Impression de codes à barres

(30) Priority: 12.08.1988 GB 8819175
(43) Date of publication of application: 14.02.1990
(73) Proprietor: Esselte Meto International GmbH, 64646 Heppenheim (DE)
(72) Inventor: Pettigrew, Robert Martin, Foxton Cambridgeshire (GB); Harry, Alan John, Royston Hertfordshire, SG8 6BA (GB); Nailor, Paul Robert, Finsbury Park London. N4 (GB); Adelmann, Fred, D-930 Eberbach am Neckar (DE); Franzen, Peter, D-6932 Hirschhorn am Neckar (DE); Schoon, Juergen, D-6930 Ederbach am Neckar (DE)
(74) Representative: Abrams, Michael John

(56) References cited:
- EP-A- 0 118 603
- EP-A- 0 126 899
- EP-A- 0 212 503
- WO-A-83/04118
- FR-A- 2 010 321
- US-A- 4 643 599

## Description

This invention relates to bar code printing and, more particularly but not exclusively, is concerned with the generation of indicia which constitute the bar code.

Bar codes are now widely used for ready identification of products at goods-in and check-out locations associated, for example, with retail trading. They facilitate the use of fully automatic in-and-out systems and, in some instances, do away with the need for price labels on the products. Many supermarkets stock 25,000 to 30,000 items for sale, however, and do not have sufficient shelf space to allocate all of these items to a particular position; as a result, even if there is a bar code on such products, there is still a need for price marking. Nevertheless, the use of a bar code scanning system to identify the goods may reduce labour requirements significantly and thus produce considerable savings.

In supermarkets, typically 95 - 96% of food items going through the check-out have a bar code already printed at source by the manufacturer. For non-food items, the number of products bar coded at source is typically 80 - 85% of those going through the check-out.

In order to apply price labels to items already carrying a bar code, and to add a bar code to those products which are not coded at source, it is common for a retail outlet to use one or more label printers. These may be hand-held or fixed in position. Typically, three stationary printers may be used by up to ten people. Strips of labels will be printed and taken to the product and either applied by hand or with a dispenser. Some retailers consider that it is more economical for each operative to have his own hand-held bar code label printer.

If a national bar code has been allocated to a given product, this will normally be used by the retailer if no manufacturer's bar code is present. For products where no such national bar code has been allocated, it is up to the retailer to decide on his own bar code number. Typically, this number might be based on the numbering system used by the retailer before the introduction of bar code scanning to his store. In practice, the person generating bar codes with a printer will have with him source material which indicates the nature of the bar code for each product where a label is required.

Hand-held labelling machines typically comprise a housing which is arranged to store a label supply roll; a printing unit; and a keyboard for inputting data. When such a machine is used to print bar code labels, an operative will input the bar code number via the keyboard, which then activates a label feed mechanism and the printing unit to apply the requested bar code to one of the labels on the supply roll. After the bar code has been printed, the label feed mechanism moves the supply roll so that the printed label is accessible for application to the appropriate goods item.

The printing unit in a typical bar code printer or labelling machine is based on a thermographic printing head. This is conventionally used in conjunction with thermographic paper. This need for a special quality of paper in conjunction with the high peak currents needed to heat the image elements of the thermographic print head tend to limit the versatility of bar code printers and to limit the operating time where the power supply for the printer is an internal battery.

If the high peak currents required by, for example, current solid state thermographic printing heads can be avoided, it may also be possible to simplify the electrical circuitry associated with the printer since there will be less need to take into account hysteresis effects (temperature against time) resulting from sequential use of the same dot matrix element on the print head.

There is therefore a need for a bar code printer/labeller which overcomes or ameliorates the above disadvantages.

According to one aspect of the present invention, there is provided a device suitable for printing bar codes, which comprises a housing, means for holding a label supply roll, a print unit for applying indicia to a label, means for supplying data to determine the nature of the indicia printed on the label, and means for supplying electrical energy to operate the device, characterised in that said print unit is a bubble ink jet print unit including a positive displacement means for conveying ink from a reservoir to the print head.

The print unit comprising an ink jet printer may operate as a bubble ink jet or according to another aspect of the present invention as a solid ink jet. In a bubble ink jet, a heating element is located in the side wall of a nozzle containing liquid ink. The heater is energised so that ink in contact with the heater is warmed abruptly, resulting in rapid evaporation of the liquid ink thereby generating rapidly inflating bubble. As the bubble expands across the width of the nozzle interior, it expels a liquid droplet from the nozzle orifice. As the heater element is de-energised, the ink bubble deflates and either vanishes or remains only as a very small, vestigial bubble. In stationary printers which operate with an ink jet mechanism, it is the supply of ink can be arranged so that there is substantially no drop in supply pressure during extended operation of the printer. In the present invention, however, care is required in the design and positioning of the ink jet print head, the ink reservoir and the associated tubing so as to achieve good performance over the life of the ink cartridge. For instance, as the level of ink in the reservoir drops, the hydrostatic pressure at the outlet from the reservoir changes. The overall system must therefore be carefully designed to be affected as little as possible by such changes. In a hand-held printer, the difficulties of achieving good performance under all conditions are compounded by the wide range of orientations in which the printer can be used. If, for instance, the printer is to be used upside down, then the relative position of the ink reservoir and the print head will be reversed; thus a system originally intended to operate with the ink reservoir below the print head will have to be capable of functioning with the reservoir above the print head, and vice versa. This demands that special measures are taken to ensure that good performance is consistently obtained. In one embodiment, this is achieved by ensuring that the tubes which connect the ink reservoir to the print head are of such a small diameter that the capillary forces acting between the ink and the internal surfaces of the tubes are large compared to the effect of gravity. Another approach is to supply the liquid ink to the print head by means of a positive displacement device such as a peristaltic pump. The delivery of ink by the pump is then synchronised with the demand for ink by the print head.

Plain paper labels may be used with such an ink jet, and the consumption of ink is low since none is wasted during the printing operation.

Another form of ink jet printer is the so-called solid or hot melt ink jet. With this sytem, a wax-based ink, normally solid, is melted to form a liquid reservoir adjacent to the ink jet print head. The print head ejects droplets of the molten ink on demand. Typically, a plug of solid ink is contained within a cylinder against which a plunger is biassed. That end of the cylinder opposite the plunger is provided with a heating element which is generally located about an outlet conduit for molten ink. The heater in the end face of the cylinder is operated so as to melt a predetermined amount of the solid ink which then travels along the outlet conduit to the print head, from which it is ultimately ejected. The interior of the outlet conduit forms a liquid reservoir. Solid ink jet printers usually require a warm-up period in which the liquid reservoir fills and reaches equilibrium.

With a solid (hot melt) ink jet, the ink has almost solidified when it contacts the substrate. Consequently, the substrate need not be absorbant and high quality printing is possible on a wide range of substrates. Since wax-based inks contain no volatile materials, they do not "dry" in the nozzle. Also, a thick and hence optically dense layer of ink can be formed by overprinting should this be required to obtain improved contrast.

For a better understanding of the invention, and to show how the same may be carried into effect, reference will now be made, by way of example, to the accompanying drawings, in which:
FIGURE 1 illustrates schematically the mode of operation of a bubble ink jet printer;
FIGURE 2 illustrates an orientation-insensitive means of transferring ink to an ink jet print head; and
FIGURE 3 illustrates part of a solid (hot melt) ink jet print system.

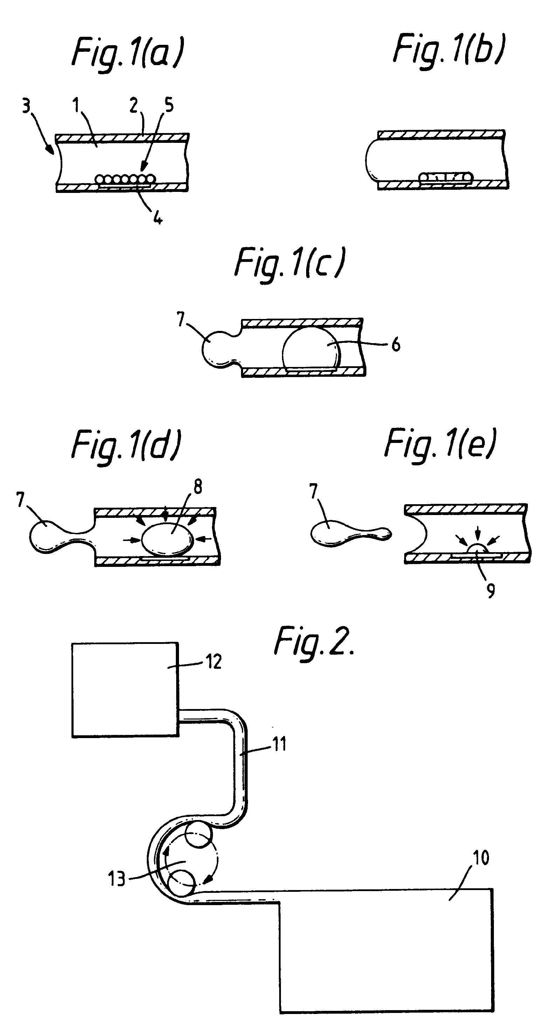

Referring to Figure 1, a volatile liquid ink 1 is contained between the walls of a conduit 2 one end 3 of which constitutes a nozzle orifice. A heating element 4 is disposed in one part of the conduit 2. The sequence illustrated in Figure 1 shows the effect of actuating heating element 4. Initially, heat generated in the wall of the conduit 2 gives rise to a series of small bubbles 5 located adjacent to the heating element 4. As heat is transferred into the liquid ink, it evaporates abruptly which causes the bubbles 5 to coalesce and inflate during which condition the bubble extends across the entire width of conduit 2. This condition is shown in Figure 1(c) where the bubble 6 is at its maximum size. The volume expansion associated with bubble formation and inflation results in progressive ejection of liquid material from orifice 3. Thus a droplet 7 begins to form and ultimately detaches itself from the liquid column within conduit 2 (see Figure 1(e)). Deflation of the bubble as at 8 continues until only a vestigial bubble 9 remains.

Figure 2 illustrates a supply system for conveying liquid ink from a reservoir 10 via a conduit 11 to a print head 12. So as to be orientation-independent, a peristaltic pump 13 is positioned to act upon conduit 11. In the schematic illustration given, the peristaltic pump has two rollers; other configurations may be used if desired.

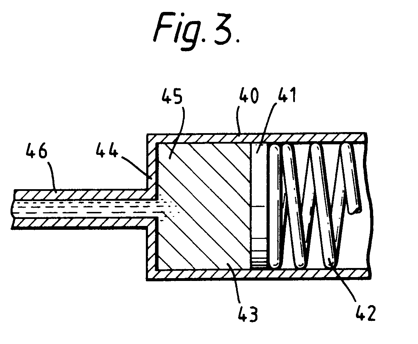

Referring now to Figure 3, a solid ink jet print unit comprises a cylinder 40 containing a plunger 41 biassed by compression spring 42. A plug of solid wax-based ink 43 is disposed between the end of plunger 41 and face 44 of cylinder 40. Face 44 includes an annular heating element 45 at the centre of which is an outlet conduit 46. In use, the heating element 45 melts some of the solid ink 43 which then travels along conduit 46 to generate a reservoir of molten ink.

## Claims

1. A hand-holdable bar code printer which comprises a housing, means for holding a label supply roll, a print unit for applying indicia to a label, means for supplying data to determine the nature of the indicia printed on the label, and means for supplying electrical energy to operate the device, characterised in that said print unit is a bubble ink jet unit including a positive displacement means for conveying ink from a reservoir to the print head.

2. A device as claimed in claim 1, wherein said positive displacement means is a peristaltic pump.

3. A device as claimed in the prior art portion of claim 1, characterised in that said print unit is a buble ink jet unit including a reservoir and a print head connected to said reservoir by capillary tubing.

4. A device as claimed in the prior art portion of claim 1, characterised in that said print unit is a hot melt ink jet print unit.

## Patentansprüche

1. Barcodedrucker zum Halten in der Hand, umfassend ein Gehäuse,
eine Einrichtung zum Halten einer Etikettenvorratsrolle,
eine Druckeinheit zum Aufbringen von Kennzeichnungen auf einem Etikett,
eine Einrichtung zum Zuführen von Daten, die die Art der auf das Etikett gedruckten Kennzeichnungen bestimmen, und
eine Einrichtung, die das Gerät mit elektrischer Energie zum Betrieb versorgt, dadurch gekennzeichnet,
daß die Druckeinheit eine Blasen-Tintenstrahldruckeinheit ist, die eine Verdrängereinrichtung zum Übertragen von Tinte aus einem Vorratsbehälter zum Druckkopf enthält.

2. Gerät nach an Anspruch 1, wobei die Verdrängereinrichtung eine Peristaltikpumpe ist.

3. Gerät nach dem Oberbegriff von Anspruch 1, dadurch gekennzeichnet, daß die Druckeinheit eine Blasen-Tintenstrahl-Druckeinheit ist, umfassend einen Vorratsbehälter und einen Druckkopf, der mit dem Vorratsbehälter über eine Kapillarröhre verbunden ist.

4. Gerät nach dem Oberbegriff von Anspruch 1, dadurch gekennzeichnet, daß die Druckeinheit eine heißschmelzende Tintenstrahl-Druckeinheit ist.

## Revendications

1. Imprimante portative de codes à barres, comprenant un logement, des moyens destinés à enfermer un rouleau d'alimentation d'étiquettes, une unité d'impression destinée à appliquer des inscriptions sur une étiquette, des moyens destinés à transmettre des données pour déterminer la nature des inscriptions imprimées sur l'étiquette et des moyens destinés à fournir l'énergie électrique pour faire fonctionner l'appareil, caractérisée en ce que ladite unité d'impression est une unité à bulles d'encre comprenant des moyens sûrs de déplacement destinés à transporter l'encre d'un réservoir à la tête d'impression.

2. Appareil selon la revendication 1, dans lequel lesdits moyens sûrs de déplacement sont une pompe péristaltique.

3. Appareil selon la partie de l'art antérieur de la revendication 1, caractérisé en ce que ladite unité d'impression est une unité à bulles d'encre comprenant un réservoir et une tête d'impression connectée audit réservoir par un tube capillaire.

4. Appareil selon la partie de l'art antérieur de la revendication 1, caractérisé en ce que ladite unité d'impression est une unité d'impression à jet d'encre chaude fondue.
